(19) Europäisches Patentamt
European Patent Office
Office européen des brevets

(11) **EP 4 335 934 A1**

(12) **EUROPEAN PATENT APPLICATION**
published in accordance with Art. 153(4) EPC

(43) Date of publication:
**13.03.2024 Bulletin 2024/11**

(21) Application number: **22832518.9**

(22) Date of filing: **25.03.2022**

(51) International Patent Classification (IPC):
***C21B 5/00*** (2006.01)        ***C21B 7/24*** (2006.01)

(52) Cooperative Patent Classification (CPC):
**C21B 5/00; C21B 7/24; Y02P 10/25**

(86) International application number:
**PCT/JP2022/014489**

(87) International publication number:
**WO 2023/276357 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2021 JP 2021106365**

(71) Applicant: **JFE Steel Corporation
Tokyo 100-0011 (JP)**

(72) Inventors:
• **ICHIKAWA, Kazuhira
  Tokyo 100-0011 (JP)**
• **YAMAMOTO, Tetsuya
  Tokyo 100-0011 (JP)**
• **SATO, Takeshi
  Tokyo 100-0011 (JP)**
• **KAWASHIRI, Yuki
  Tokyo 100-0011 (JP)**

(74) Representative: **Hoffmann Eitle
Patent- und Rechtsanwälte PartmbB
Arabellastraße 30
81925 München (DE)**

(54) **SUPPLIED HEAT QUANTITY ESTIMATION METHOD, SUPPLIED HEAT QUANTITY ESTIMATION DEVICE, SUPPLIED HEAT QUANTITY ESTIMATION PROGRAM, AND OPERATION METHOD FOR BLAST FURNACE**

(57)    A supplied heat quantity estimation method according to the present invention includes a step of calculating an iron making speed using an amount of oxygen in blown air per unit time, an amount of carbon gasified in a blast furnace, and an amount of carbon required for heating and reducing iron content per predetermined unit amount in molten iron, and estimating a quantity of heat supplied to pig iron in the blast furnace using the calculated iron making speed, and a step of estimating a quantity of heat held in deadman coke present in the blast furnace, and estimating the quantity of heat supplied to pig iron in the blast furnace in consideration of the estimated quantity of heat held in deadman coke.

FIG.2

EP 4 335 934 A1

## Description

Field

The present invention relates to a supplied heat quantity estimation method, a supplied heat quantity estimation device, a supplied heat quantity estimation program that are for estimating the quantity of heat supplied to pig iron in a blast furnace, and a blast furnace operation method.

Background

Generally, in order to stably operate a blast furnace, the molten iron temperature needs to be maintained within a predetermined range. Specifically, in a case where the molten iron temperature is low, the viscosity of molten iron and slag generated together with the molten iron increases, and the molten iron or the slag is made difficult to be discharged from an iron outlet. On the other hand, in a case where the molten iron temperature is high, the Si concentration in the molten iron increases and the viscosity of the molten iron increases, and accordingly, there is a high risk that the molten iron clings to a tuyere and melts the tuyere. Therefore, in order to stably operate a blast furnace, the fluctuation of the molten iron temperature needs to be reduced. From such a background, various methods for estimating the quantity of heat supplied into a blast furnace and the molten iron temperature have been proposed. Specifically, Patent Literature 1 discloses a furnace heat control method for a blast furnace, including sequentially estimating a furnace heat index displacement amount at the present time from a furnace heat index reference level corresponding to a target molten iron temperature, a descending speed displacement amount at the present time from a descending speed reference level of a furnace top corresponding to the target molten iron temperature, and a molten iron temperature after a specific time from an influence time of both displacement amounts on the molten iron temperature, and performing a furnace heat control operation such that a molten iron temperature fluctuation is reduced based on the estimation result. Furthermore, Patent Literature 2 discloses a future molten iron temperature prediction method for a blast furnace for predicting a future molten iron temperature based on operation data including an actual value of blast condition data including at least one of a blown air temperature, a blown air humidity, a blown air amount, a pulverized coal blow-by amount, or an oxygen enrichment amount in a blast furnace, an actual value of disturbance factor data including at least a solution loss carbon amount, and an actual value of a molten iron temperature, the method including a data accumulation process of accumulating operation data, a steady state prediction model construction process of constructing a steady state prediction model for predicting a molten iron temperature in a steady state from operation data in a steady state accumulated in the data accumulation process, a non-steady state prediction model construction process of constructing a non-steady state prediction model for predicting a molten iron temperature in a non-steady state from operation data in a non-steady state accumulated in the data accumulation process, the non-steady state prediction model being obtained by reducing a dimension of the steady state prediction model, and a molten iron temperature prediction process of predicting a molten iron temperature from the constructed steady state prediction model and non-steady state prediction model.

Citation List

Patent Literature

Patent Literature 1: JP H2-115311 A
Patent Literature 2: JP 2008-144265 A

Summary

Technical Problem

The timing at which there is a high possibility that a molten iron temperature greatly fluctuates is when the amount of molten iron produced changes due to a change in the operation rate such as the amount of air blown into the blast furnace, and the amount of pig iron changes with respect to the quantity of heat supplied into the blast furnace. Furthermore, in normal operation, a raw material is charged such that the height of the surface of the raw material in the blast furnace is kept constant. Therefore, the amount of molten iron produced per unit time can be estimated from the amount of iron in the raw material charged per unit time. Furthermore, since the oxidation degree of the raw material charged (ratio of the number of moles of oxygen to the number of moles of iron in the iron ore material) is known, the amount of molten iron produced per unit time can also be calculated from the balance between carbon and oxygen per unit time in the blast furnace. However, during descending operation in which the height of the raw material charging surface is gradually lowered, the raw material charging is not performed or the raw material charging is performed intermittently, and thus the amount of molten iron produced per unit time is difficult to be estimated from the amount of iron in the raw material charged per unit time. Furthermore, in a case where the height of the surface of the raw material greatly decreases due to no charging of the raw material, the reduction rate of the ore on the surface of the raw material increases, and thus the amount of molten iron is difficult to be accurately calculated from the balance of carbon and oxygen per unit time in the blast furnace.

However, since the method described in Patent Literature 1 does not take into consideration a factor such as carried out sensible heat by blown air sensible heat that is considered to change due to an increase or decrease in the operation rate, the quantity of heat supplied to pig iron when the operation rate is greatly changed cannot be accurately estimated. On the other hand, in the method described in Patent Literature 2, it is considered that the estimation accuracy of the molten iron temperature decreases when an operation change that has not been accumulated in the past is made. Furthermore, in a case where the estimation accuracy of the molten iron temperature is low as described above, there are many cases where excessive heat supply occurs, and there is a concern about equipment trouble. Furthermore, excessive use of a reducing material that is a carbon source is not preferable also from the perspective of reducing carbon dioxide emissions.

The present invention has been made in view of the above issues, and an object of the present invention is to provide a supplied heat quantity estimation method, a supplied heat quantity estimation device, and a supplied heat quantity estimation program capable of accurately estimating the quantity of heat supplied to pig iron in a blast furnace when the operation rate greatly changes, particularly even in descending operation. Another object of the present invention is to provide a blast furnace operation method in which a molten iron temperature can be accurately controlled within a predetermined range while the quantity of heat supplied to pig iron in the blast furnace is appropriately maintained when the operation rate greatly changes, particularly even in descending operation. Solution to Problem

A supplied heat quantity estimation method according to the present invention estimates a quantity of heat supplied to pig iron in a blast furnace from a quantity of heat supplied into the blast furnace and a production speed of molten iron in the blast furnace, and includes an estimation step of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, the estimation step includes a step of calculating an iron making speed using an amount of oxygen in blown air per unit time, an amount of carbon gasified in the blast furnace, and an amount of carbon required for heating and reducing iron content per predetermined unit amount in molten iron, and estimating the quantity of heat supplied to pig iron in the blast furnace using the calculated iron making speed, and a step of estimating a quantity of heat held in deadman coke present in the blast furnace, and estimating the quantity of heat supplied to pig iron in the blast furnace in consideration of the estimated quantity of heat held in deadman coke.

A supplied heat quantity estimation device according to the present invention estimates a quantity of heat supplied to pig iron in a blast furnace from a quantity of heat supplied into the blast furnace and a production speed of molten iron in the blast furnace, and includes an estimation unit configured to estimate a change in carried out sensible heat by in-furnace passing gas and a change in carried in sensible heat supplied by a raw material preheated by the in-furnace passing gas, and estimate the quantity of heat supplied to pig iron in the blast furnace in consideration of the estimated changes of the carried out sensible heat and the carried in sensible heat, wherein the estimation unit is configured to calculate an iron making speed using an amount of oxygen in blown air per unit time, an amount of carbon gasified in the blast furnace, and an amount of carbon required for heating and reducing iron content per predetermined unit amount in molten iron, estimate the quantity of heat supplied to pig iron in the blast furnace using the calculated iron making speed, estimate a quantity of heat held in deadman coke present in the blast furnace, and estimate the quantity of heat supplied to pig iron in the blast furnace in consideration of the estimated quantity of heat held in deadman coke.

A supplied heat quantity estimation program according to the present invention causes a computer to execute processing of estimating a quantity of heat supplied to pig iron in a blast furnace from a quantity of heat supplied into the blast furnace and a production speed of molten iron in the blast furnace, and causes the computer to execute an estimation process of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, wherein the estimation process includes calculating an iron making speed using an amount of oxygen in blown air per unit time, an amount of carbon gasified in the blast furnace, and an amount of carbon required for heating and reducing iron content per predetermined unit amount in molten iron, and estimating the quantity of heat supplied to pig iron in the blast furnace using the calculated iron making speed, and estimating a quantity of heat held in deadman coke present in the blast furnace, and estimating the quantity of heat supplied to pig iron in the blast furnace in consideration of the estimated quantity of heat held in deadman coke.

A blast furnace operation method according to the present invention includes a step of controlling a quantity of heat supplied into the blast furnace based on the quantity of heat supplied to pig iron in the blast furnace estimated by the supplied heat quantity estimation method according to the present invention.

Advantageous Effects of Invention

According to a supplied heat quantity estimation method, a supplied heat quantity estimation device, and a supplied heat quantity estimation program according to the present invention, the quantity of heat supplied to pig iron in a blast furnace can be accurately estimated when the operation rate greatly changes, particularly even in descending operation. According to a blast furnace operation method according to the present invention, a molten iron temperature can be accurately controlled within a predetermined range while the quantity of heat supplied to pig iron in the blast furnace is appropriately maintained when the operation rate greatly changes, particularly even in descending operation.

Brief Description of Drawings

FIG. 1 is a block diagram illustrating a configuration of a furnace heat control device according to one embodiment of the present invention.
FIG. 2 is a flowchart illustrating a flow of furnace heat control processing according to the one embodiment of the present invention.

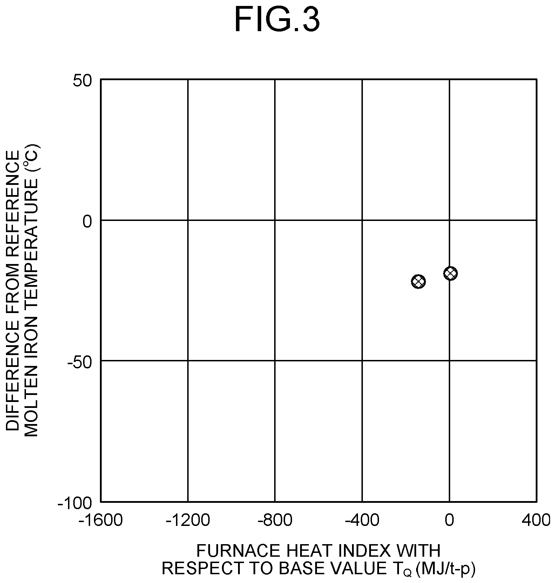

FIG. 3 is a diagram illustrating an example of a relationship between a conventional index and a furnace heat index of the present invention, and a temperature difference from a reference molten iron temperature. Description of Embodiments

Hereinafter, a configuration and operation of a furnace heat control device according to one embodiment of the present invention to which a supplied heat quantity estimation method and a supplied heat quantity estimation device according to the present invention are applied will be described with reference to the drawings.

[Configuration]

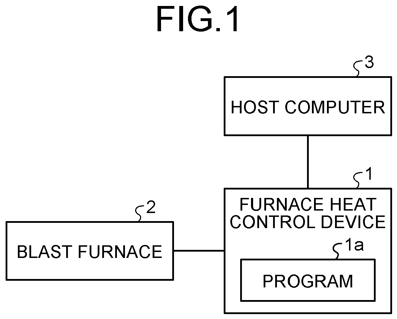

First, a configuration of a furnace heat control device according to one embodiment of the present invention will be described with reference to FIG. 1. FIG. 1 is a block diagram illustrating a configuration of the furnace heat control device according to the one embodiment of the present invention. As illustrated in FIG. 1, a furnace heat control device 1 according to the one embodiment of the present invention includes an information processing device such as a computer, and controls the temperature of molten iron produced in a blast furnace 2 within a predetermined range by controlling the quantity of heat supplied to a melt in the blast furnace 2 from a tuyere disposed in a lower part of the blast furnace 2. The furnace heat control device 1 functions as a supplied heat quantity estimation device according to the present invention.

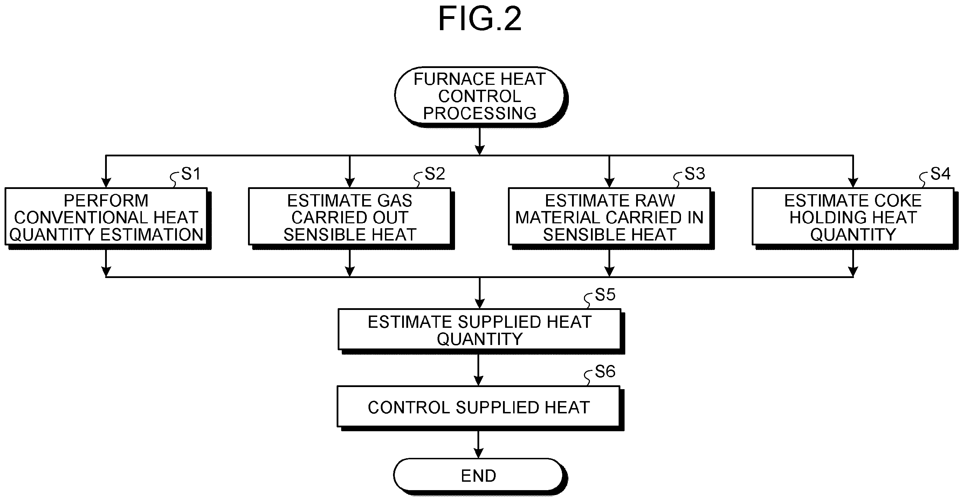

The furnace heat control device 1 having such a configuration, by executing furnace heat control processing described below, accurately estimates the quantity of heat supplied to pig iron in the blast furnace 2 when the operation rate of the blast furnace 2 greatly changes, particularly even in descending operation, and accurately controls the molten iron temperature within a predetermined range while appropriately maintaining the quantity of heat supplied to pig iron in the blast furnace 2 using the estimation result. Hereinafter, a flow of the furnace heat control processing according to the one embodiment of the present invention will be described with reference to FIG. 2.

Note that the operation of the furnace heat control device 1 described below is implemented by an arithmetic processing device such as a CPU in the information processing device included in the furnace heat control device 1 loading a program 1a from a storage unit such as a ROM to a temporary storage unit such as a RAM and executing the loaded program 1a. The program 1a may be provided by being recorded in a computer-readable recording medium such as a CD-ROM, a flexible disk, a CD-R, or a DVD as a file in an installable format or an executable format. The program 1a may be stored in a computer connected to a network such as a telecommunication line such as the Internet, a telephone communication network such as a mobile phone, or a wireless communication network such as WiFi (registered trademark), and provided by being downloaded via the network.

[Furnace heat control processing]

FIG. 2 is a flowchart illustrating a flow of furnace heat control processing according to the one embodiment of the present invention. The flowchart illustrated in FIG. 2 starts at a timing when an execution command of the furnace heat control processing is input to the furnace heat control device 1, and in the furnace heat control processing, processing of steps S2, S3, and S4 is performed in addition to processing of step S1 of estimating the quantity of heat supplied into the blast furnace by a reaction heat balance (heat of reaction generation, reaction endotherm) in the blast furnace, blown air sensible heat, heat loss (quantity of heat removed from the furnace body or the like), and the like, which has been conventionally performed, the processing is integrated, and then processing of step S5 of estimating the supplied heat quantity is proceeded to. The processing of step S1 of estimating the quantity of heat supplied into the blast furnace by the reaction heat balance (heat of reaction generation, reaction endotherm) in the blast furnace, blown air sensible heat, heat loss (quantity of heat removed from the furnace body or the like), and the like is conventionally performed, and the supplied heat quantity at this time is set as $Q_0$. A preferred example of the processing in step S1 will be described below.

In the processing of step S2, the furnace heat control device 1 estimates sensible heat (gas carried out sensible heat) $Q_7$ carried out to the upper part of the blast furnace 2 by the gas (in-furnace passing gas) passing from the lower part to the upper part of the blast furnace 2. Specifically, the gas carried out sensible heat $Q_7$ (MJ/t-p: quantity of heat per ton of pig iron.

Hereinafter, t-p represents pig iron tonnage) can be calculated by multiplying a temperature difference between an estimated temperature of gas combusted in front of the tuyere and a reference temperature representing a temperature of the upper end of the lower part of the blast furnace by the specific heat of the gas, and is expressed by the following Formula (1). As a result, the processing of step S2 is completed, and the processing proceeds to the processing of step S5.

$$Q_7 = \alpha \cdot \left\{ \sum (C_i \cdot V_i) \right\} \cdot (TFT - T_{base}) \cdot \frac{1}{Pig} \qquad \cdots (1)$$

Here, $C_i$ represents the specific heat ($MJ/m^3/°C$) of the gas species i (nitrogen, carbon monoxide, hydrogen), $V_i$ represents the flow rate ($m^3$(s.t.p)/min)($m^3$(s.t.p):0°C, volume at 1 atm (atmospheric pressure)) of the gas species i in Bosch gas, TFT represents a theoretical combustion temperature (°C), $T_{base}$ represents a reference temperature (°C) (800 to 1200°C, preferably 900 to 1000°C), Pig represents an iron making speed (t-p/min), and $\alpha$ represents an influence coefficient changed by the blast furnace 2. These values can be acquired from a host computer 3 such as a process computer connected to the furnace heat control device 1 via a telecommunication line, for example.

In normal operation, a raw material is charged such that the height of the surface of the raw material in the blast furnace is kept constant. Therefore, the amount of molten iron produced per unit time can be estimated from the amount of iron in the raw material charged per unit time. Furthermore, since the oxidation degree of the raw material charged (ratio of the number of moles of oxygen to the number of moles of iron in the iron ore material) is known, the amount of molten iron produced per unit time can also be calculated from the balance between carbon and oxygen per unit time in the blast furnace. However, during descending operation in which the height of the raw material charging surface is gradually lowered, the raw material charging is not performed or the raw material charging is performed intermittently, and thus the amount of molten iron produced per unit time is difficult to be estimated from the amount of iron in the raw material charged per unit time. Furthermore, in a case where the height of the surface of the raw material greatly decreases due to no charging of the raw material, the reduction rate of the ore on the surface of the raw material increases, and thus the amount of molten iron is difficult to be accurately calculated from the balance of carbon and oxygen per unit time in the blast furnace.

Therefore, in the present embodiment, the amount of molten iron produced per unit time is estimated without being affected by the amount of iron charged per unit time and the degree of oxidation of the raw material on the surface of the raw material, using the amount of oxygen in blown air per unit time, the amount of carbon gasified in the blast furnace, and the amount of carbon required for heating and reducing 1 kmol of iron in the molten iron. Specifically, when a value obtained by rebating the amount of carbon gasified in a reaction of $2FeO + C \rightarrow 2Fe + CO_2$ to the amount per 1 kmol of Fe is $y_{sl}$ (kmol-C/kmol-Fe), and a value obtained by rebating the amount of carbon gasified at the tuyere in a reaction of $2C + O_2 \rightarrow 2CO$ or $C + H_2O \rightarrow CO + H_2$ by blown air oxygen and oxygen of blown air moisture to the amount per 1 kmol of Fe is $y_b$ (kmol-C/kmol-Fe), the amount of carbon X (kmol-C/kmol-Fe) required for heating and reducing per 1 kmol of iron content in the molten iron is represented by the following Formula (2). Here, since the ratio of a reducing material with which the blast furnace is filled is known, the amount of carbon X (kmol-C/kmol-Fe) required for heating and reducing iron per 1 kmol of iron content in the molten iron can be obtained by converting the amount of carbon into a molar quantity from the ratio of the reducing material and also converting the amount of iron contained in 1 t of molten iron of the denominator of the ratio of the reducing material into a molar quantity.

$$X = y_{sl} + y_b \qquad \cdots (2)$$

Furthermore, the amount of carbon A (kmol-C/min) consumed by a direct reduction per unit time can be measured as an increase amount of the amount of carbon while gas generated by combustion in front of the tuyere reacts in the blast furnace and is discharged from the upper part of the blast furnace, and thus can be obtained from the difference between a composition of blown air gas and a gas analysis value of the upper part of the blast furnace. When the amount of carbon contained in CO generated by oxygen contained in blown air and moisture in blown air is denoted by B (kmol-C/min), a relationship represented by the following Formula (3) is established between the above-mentioned $y_{sl}$ and $y_b$.

$$A:B = y_{sl}:y_b \qquad \cdots (3)$$

Therefore, the following Formulas (4) and (5) are obtained by solving the Formulas (2) and (3) for $y_b$ and $y_{sl}$. Since the amount of oxygen in blown air (kmol-O/min) is known from air blowing conditions, the molar quantity of iron produced per unit time (iron making speed (kmol-Fe/min)) can be obtained by dividing the amount of oxygen in blown air by the $y_{sl}$ value indicated in Formula (5). Here, by multiplying the calculated molar quantity of iron by a molar mass of iron and dividing the obtained value by a weight ratio of iron in the molten iron, the amount of molten iron produced per unit time can be obtained. As a result, the amount of molten iron produced per unit time can be accurately estimated even in descending operation. Note that, as the weight ratio of iron in the molten iron, an analysis value of a molten iron component is preferably used, and an immediately preceding analysis value is more preferably used.

$$y_b = X \frac{B}{A+B} \qquad \cdots (4)$$

$$y_{sl} = X \frac{A}{A+B} \qquad \cdots (5)$$

In the processing of step S3, the furnace heat control device 1 estimates sensible heat (raw material carried in sensible heat) $Q_8$ carried in to the lower part of the blast furnace 2 by the raw material supplied from the upper part to the lower part of the blast furnace 2. Specifically, the raw material carried in sensible heat $Q_8$ (MJ/t-p) can be calculated by multiplying the temperature difference between the raw material temperature $T_1$ (= 1450 to 1500°C) at the lower end of a fusion zone and the reference temperature $T_{base}$ by the specific heat of the raw material as indicated by the following Formula (6). As a result, the processing of step S3 is completed, and the processing proceeds to the processing of step S5.

$$Q_8 = \beta \cdot \left\{ \sum (C_j \cdot R_j) \right\} \cdot (T_1 - T_{base}) \qquad \cdots (6)$$

Here, $C_j$ represents specific heat (MJ/kg/°C) of a raw material j (coke, pig iron, slag), $R_j$ represents a basic unit (kg/t-p) of the raw material j, $T_1$ represents a raw material temperature (°C) at the lower end of the fusion zone, $T_{base}$ represents the reference temperature (°C), and $\beta$ represents an influence coefficient changed by the blast furnace 2. These values can be acquired from, for example, the host computer 3.

In the processing of step S4, the furnace heat control device 1 estimates the quantity of heat (coke holding heat quantity) $Q_9$ held in the deadman coke present in the lower part of the blast furnace 2. Specifically, the coke holding heat quantity $Q_9$ (MJ/t-p) can be obtained by multiplying a value obtained by subtracting a combustion consumption amount and a carbon amount discharged as dust from a coke basic unit per 1 t of molten iron by a difference between a reference temperature and a theoretical combustion temperature and specific heat of coke $C_{ooke}$, and is expressed by the following Formula (7). As a result, the processing of step S4 is completed, and the processing proceeds to the processing of step S5. Note that the processing of step S4 may be omitted.

$$Q_9 = \gamma \cdot C_{Coke} \cdot (\delta \cdot TFT - T_{base})$$
$$\cdot \left\{ CR - \frac{(CR_{burn} - PCR \cdot C_{inPC}) + C_{sol} + Dust \cdot C_{indust}}{0.88} \right\} \qquad \cdots (7)$$

Here, $C_{coke}$ represents the specific heat of coke (MJ/kg/°C), TFT represents the theoretical combustion temperature (°C), $T_{base}$ represents the reference temperature (°C), CR represents a coke ratio (kg/t-p), $CR_{burn}$ represents a pre-tuyere combustion carbon ratio (amount of oxygen consumed in front of the tuyere by blown air oxygen and humidity control) (kg/t-p), PCR represents a pulverized coal ratio (kg/t-p), $C_{inPC}$ represents a carbon ratio in pulverized coal, $C_{sol}$ represents a solution loss carbon ratio (kg/t-p), Dust represents a dust ratio (kg/t-p), $C_{indust}$ represents a carbon ratio in dust, and $\gamma$ and $\delta$ represent influence coefficients changed by the blast furnace 2. These values can be acquired from, for example, the host computer 3.

In the processing of step S5, the furnace heat control device 1 estimates the quantity of heat supplied to pig iron in the blast furnace 2 using the supplied heat quantity $Q_0$ estimated in the processing of step S1, the gas carried out sensible heat $Q_7$, the raw material carried in sensible heat $Q_8$, and the coke holding heat quantity $Q_9$ that are estimated in the processing of steps S2 to S4. Specifically, the furnace heat control device 1 calculates a furnace heat index $T_Q$ (MJ/t-p) corresponding to the quantity of heat supplied to pig iron in the blast furnace 2 by substituting the supplied heat quantity $Q_0$ estimated in step S1, the gas carried out sensible heat $Q_7$, the raw material carried in sensible heat $Q_8$, and the coke holding heat quantity $Q_9$ that are estimated in the processing of steps S2 to S4 into the following Formula (8). As a result, the processing of step S5 is completed, and the processing proceeds to the processing of step S6. Note that, in a case where the processing of step S4 is omitted, the value of the coke holding heat quantity $Q_9$ is set to zero.

$$T_Q = Q_0 - Q_7 + Q_8 - Q_9 \qquad \cdots (8)$$

Here, $Q_0$ represents the quantity of heat supplied into the blast furnace by the reaction heat balance (heat of reaction generation, reaction endotherm) in the blast furnace, blown air sensible heat, heat loss (quantity of heat removed from the furnace body or the like), and the like, and an estimation method adopted in many cases in the conventional supplied heat quantity estimation can be applied, but as a preferable form, Formula (9) can be cited.

$$Q_0 = Q_1 + Q_2 - Q_3 - Q_4 - Q_5 - Q_6 \qquad \cdots (9)$$

Here, $Q_1$ represents combustion heat (MJ/t-p) of post-tuyere coke. The combustion heat $Q_1$ can be calculated by dividing the calorific amount due to combustion of coke calculated from the amount of oxygen blown from the tuyere to the blast furnace per unit time by the amount of molten iron produced per unit time (iron making speed). The iron making speed can be accurately calculated even at the time of descending operation by the above-described method.

Furthermore, $Q_2$ represents blown air sensible heat (MJ/t-p) input to the blast furnace by blown air from the tuyere. The blown air sensible heat $Q_2$ can be calculated by obtaining the quantity of heat input to the blast furnace by blown air per unit time from the blown air amount per unit time and the measured value of the blown air temperature, and dividing this value by the amount of molten iron produced per unit time.

Furthermore, $Q_3$ represents solution loss reaction heat (MJ/t-p). For this value, for example, as described in Patent Literature 1, the reaction heat can be calculated by obtaining the solution loss carbon amount from the furnace top gas component value. The solution loss reaction heat $Q_3$ can be calculated by dividing the solution loss reaction heat by the amount of molten iron produced per unit time.

Furthermore, $Q_4$ represents heat of decomposition (MJ/t-p) of moisture mainly contained in blown air. The heat of decomposition $Q_4$ can be calculated by dividing heat of decomposition obtained from the measured value of the blown air moisture by the amount of molten iron produced per unit time.

Furthermore, $Q_5$ represents heat loss from the furnace body (for example, quantity of heat removed by cooling water) (MJ/t-p). In a case where the quantity of heat removed by cooling water is calculated as the heat loss, the quantity of heat removed $Q_5$ can be calculated by calculating the quantity of heat removed by the cooling water per unit time from the amount of the cooling water and the temperature difference between the inlet side and the outlet side of the cooling water of the furnace body of the blast furnace, and dividing the calculated quantity of heat removed by the amount of molten iron produced per unit time.

Furthermore, $Q_6$ represents the heat of decomposition (MJ/t-p) of the reducing material blown from the tuyere per unit time. The heat of decomposition $Q_6$ can be calculated by dividing the heat of decomposition by the amount of molten iron produced per unit time.

In the processing of step S6, the furnace heat control device 1 controls the quantity of heat supplied from the tuyere into the blast furnace 2 based on the quantity of heat supplied to pig iron in the blast furnace 2 estimated in the processing of step S5, thereby appropriately maintaining the quantity of heat supplied to the pig iron in the blast furnace 2 and controlling the molten iron temperature within a predetermined range. As a result, the processing of step S6 is completed, and a series of the furnace heat control processing ends.

As is apparent from the above description, in the furnace heat control processing according to the one embodiment of the present invention, the furnace heat control device 1 estimates a change in carried out sensible heat to the upper part of the blast furnace by in-furnace passing gas and a change in carried in sensible heat supplied to the lower part of the blast furnace by a raw material preheated by the in-furnace passing gas, and estimates the quantity of heat supplied to pig iron in the blast furnace in consideration of the estimated changes of the carried out sensible heat and the carried in sensible heat. Furthermore, the furnace heat control device 1 calculates the iron making speed using the amount of oxygen in blown air per unit time, the amount of carbon gasified in the blast furnace, and the amount of carbon required for heating and reducing the iron content per predetermined unit amount in molten iron, estimates the quantity of heat supplied to pig iron in the blast furnace using the calculated iron making speed, estimates the quantity of heat held in the deadman coke present in the blast furnace, and estimates the quantity of heat supplied to the pig iron in the blast furnace in consideration of the estimated quantity of heat held in the deadman coke. As a result, the quantity of heat supplied to the pig iron in the blast furnace can be accurately estimated when the operation rate such as the amount of air blown into the blast furnace greatly changes, particularly even in descending operation. As a result, the molten iron temperature can be accurately controlled within a predetermined range while the quantity of heat supplied to the pig iron in the blast furnace is appropriately maintained when the operation rate greatly changes, particularly even in descending operation.

[Example]

FIG. 4 indicates results of comparing a conventional furnace heat index (estimated by $Q_1$ to $Q_6$) and a furnace heat index (estimated by $Q_1$ to $Q_9$) of the present invention in descending operation with an actual molten iron temperature (difference from the reference molten iron temperature). As indicated in FIG. 4, in the furnace heat index of the present invention (present invention example), a certain correlation between the furnace heat index and the molten iron temperature (difference from the reference molten iron temperature) can be confirmed as compared with the conventional furnace heat index (comparative example). Furthermore, Table 1 indicates a summary of the standard deviation of the difference between the estimated molten iron temperature and the actual molten iron temperature when each factor is taken into consideration. It can be seen that the estimation accuracy was improved in the case of estimating the furnace heat index by $Q_1$ to $Q_9$ using the method of calculating the iron making speed of the present invention (present invention example) as compared with the case of estimating the furnace heat index using only $Q_1$ to $Q_6$ as the conventional furnace heat index (Comparative Example 1) and the case of estimating the furnace heat index using $Q_1$ to $Q_9$ without using the method of calculating the iron making speed of the present invention (Comparative Example 2). As a result, it can be seen that the molten iron temperature can be accurately controlled within a predetermined range while the quantity of heat supplied to the pig iron in the blast furnace is appropriately maintained when the operation rate greatly changes, particularly even in descending operation, using the furnace heat index of the present invention.

Table 1

|  | Comparative Example 1 | Comparative Example 2 | Present invention example |
|---|---|---|---|
| Considered indexes | $Q_1$ to $Q_6$ | $Q_1$ to $Q_9$ | $Q_1$ to $Q_9$ |
| Standard deviation of actual molten iron temperature with respect to estimated molten iron temperature | 127.1 | 110.3 | 14.3 |

Although the embodiment to which the invention made by the present inventors is applied has been described above, the present invention is not limited by the description and drawings constituting a part of the disclosure of the present invention according to the present embodiment. That is, other embodiments, examples, operation techniques, and the like made by those skilled in the art based on the present embodiment are all included in the scope of the present invention.

Industrial Applicability

According to the present invention, a supplied heat quantity estimation method, a supplied heat quantity estimation device, and a supplied heat quantity estimation program capable of accurately estimating the quantity of heat supplied to pig iron in a blast furnace when the operation rate greatly changes, particularly even in descending operation can be provided. According to the present invention, a blast furnace operation method in which a molten iron temperature can be accurately controlled within a predetermined range while the quantity of heat supplied to pig iron in the blast furnace is appropriately maintained when the operation rate greatly changes, particularly even in descending operation can be provided.

Reference Signs List

1    FURNACE HEAT CONTROL DEVICE
1a   PROGRAM
2    BLAST FURNACE
3    HOST COMPUTER


**Claims**

1. A supplied heat quantity estimation method for estimating a quantity of heat supplied to pig iron in a blast furnace from a quantity of heat supplied into the blast furnace and a production speed of molten iron in the blast furnace, the supplied heat quantity estimation method comprising

an estimation step of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat,
wherein the estimation step includes

a step of calculating an iron making speed using an amount of oxygen in blown air per unit time, an amount of carbon gasified in the blast furnace, and an amount of carbon required for heating and reducing iron content per predetermined unit amount in molten iron, and estimating the quantity of heat supplied to pig iron in the blast furnace using the calculated iron making speed, and
a step of estimating a quantity of heat held in deadman coke present in the blast furnace, and estimating the quantity of heat supplied to pig iron in the blast furnace in consideration of the estimated quantity of heat held in deadman coke.

2. A supplied heat quantity estimation device for estimating a quantity of heat supplied to pig iron in a blast furnace from a quantity of heat supplied into the blast furnace and a production speed of molten iron in the blast furnace, the supplied heat quantity estimation device comprising

an estimation unit configured to

estimate a change in carried out sensible heat by in-furnace passing gas and a change in carried in sensible heat supplied by a raw material preheated by the in-furnace passing gas, and
estimate the quantity of heat supplied to pig iron in the blast furnace in consideration of the estimated changes of the carried out sensible heat and the carried in sensible heat,

wherein the estimation unit is configured to

calculate an iron making speed using an amount of oxygen in blown air per unit time, an amount of carbon gasified in the blast furnace, and an amount of carbon required for heating and reducing iron content per predetermined unit amount in molten iron,
estimate the quantity of heat supplied to pig iron in the blast furnace using the calculated iron making speed,
estimate a quantity of heat held in deadman coke present in the blast furnace, and
estimate the quantity of heat supplied to pig iron in the blast furnace in consideration of the estimated quantity of heat held in deadman coke.

3. A supplied heat quantity estimation program for causing a computer to execute processing of estimating a quantity of heat supplied to pig iron in a blast furnace from a quantity of heat supplied into the blast furnace and a production speed of molten iron in the blast furnace, the supplied heat quantity estimation program causing the computer to execute

an estimation process of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat,
wherein the estimation process includes

calculating an iron making speed using an amount of oxygen in blown air per unit time, an amount of carbon gasified in the blast furnace, and an amount of carbon required for heating and reducing iron content per predetermined unit amount in molten iron, and estimating the quantity of heat supplied to pig iron in the blast furnace using the calculated iron making speed, and
estimating a quantity of heat held in deadman coke present in the blast furnace, and estimating the quantity of heat supplied to pig iron in the blast furnace in consideration of the estimated quantity of heat held in deadman coke.

4. A blast furnace operation method comprising a step of controlling a quantity of heat supplied into the blast furnace based on the quantity of heat supplied to pig iron in the blast furnace estimated by the supplied heat quantity estimation method according to claim 1.

# FIG.1

HOST COMPUTER 3

FURNACE HEAT CONTROL DEVICE 1

BLAST FURNACE 2

PROGRAM 1a

# FIG.2

FURNACE HEAT CONTROL PROCESSING

S1 — PERFORM CONVENTIONAL HEAT QUANTITY ESTIMATION

S2 — ESTIMATE GAS CARRIED OUT SENSIBLE HEAT

S3 — ESTIMATE RAW MATERIAL CARRIED IN SENSIBLE HEAT

S4 — ESTIMATE COKE HOLDING HEAT QUANTITY

S5 — ESTIMATE SUPPLIED HEAT QUANTITY

S6 — CONTROL SUPPLIED HEAT

END

# FIG.3

## INTERNATIONAL SEARCH REPORT

| International application No. |
|---|
| **PCT/JP2022/014489** |

**A. CLASSIFICATION OF SUBJECT MATTER**

***C21B 5/00***(2006.01)i; ***C21B 7/24***(2006.01)i
FI: C21B5/00 310; C21B7/24

According to International Patent Classification (IPC) or to both national classification and IPC

**B. FIELDS SEARCHED**

Minimum documentation searched (classification system followed by classification symbols)

C21B5/00; C21B7/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-145520 A (JFE STEEL CORP) 20 September 2018 (2018-09-20)<br>entire text | 1-4 |
| A | 羽田野道春　他, 溶銑温度制御のための高炉数式モデル, 鉄と鋼, 01 March 1981, 67th (1981), no. 3, pp. 518-527<br>entire text, (HATANO, Michiharu et al. A Mathematical Model of Blast Furnace for Control of Hot Metal Temperature. Tetsu-to-Hagane.) | 1-4 |
| A | JP 2018-24936 A (JFE STEEL CORP) 15 February 2018 (2018-02-15)<br>entire text | 1-4 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/014489**

| Patent document cited in search report | | | Publication date (day/month/year) | Patent family member(s) | Publication date (day/month/year) |
|---|---|---|---|---|---|
| JP | 2018-145520 | A | 20 September 2018 | (Family: none) | |
| JP | 2018-24936 | A | 15 February 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2115311 A

- JP 2008144265 A